# EUROPEAN PATENT APPLICATION

(11) **EP 4 780 028 A1**
(43) Date of publication of application: **22.07.2026**
(21) Application number: 25153077.0
(22) Date of filing: 21.01.2025
(51) Int. Cl.: H04W 4/50, H04L 9/40, H04W 12/00

(54) **DEVICE AND METHOD FOR PROVIDING A SENSING SERVICE BY A MOBILE RADIO COMMUNICATION SYSTEM**

(71) Applicant: NTT DOCOMO, INC., Tokyo 100-6150 (JP)
(72) Inventor: AZEM, Dania, 80687 Munich (DE); GUERZONI, Riccardo, 80687 Munich (DE); SAMA, Malla Reddy, 80687 Munich (DE); DOJIRI, Shunsuke, Tokyo, 100-6150 (JP)
(74) Representative: Viering, Jentschura & Partner mbB Patent- und Rechtsanwälte

(57) **Abstract**

According to one embodiment, a method for providing an environment and/or object sensing service by a mobile radio communication system is provided, comprising operating, in a mobile terminal of the mobile radio communication system, a secure element provisioned with a sensing service profile which specifies one or more sensing parameters, receiving, by the mobile terminal, a request to perform a sensing, wherein the sensing comprises transmitting one or more mobile radio communication signals, receiving one or more reflections of the one or more mobile radio communication signals and determining sensing data from the one or more reflections and performing the sensing according to the one or more sensing parameters by the mobile terminal.

## Description

The present disclosure relates to devices and methods for providing a sensing service by a mobile radio communication system.

According to 3GPP ISAC (Integrated Sensing and Communication), mobile terminals of a 5G (Fifth Generation) communication system can perform 5G wireless sensing, i.e. get information about characteristics of an environment and/or objects within the environment (e.g., shape, size, orientation, speed, location, distances or relative motion between objects, etc) using NR (new radio) radio frequency signals. This capability, however, may raise privacy and security concerns since it may not be desirable that any third party requesting such a service can gather detailed information about the environment of a mobile terminal. Accordingly, approaches for effective control of usage of such a sensing service are desirable.

According to one embodiment, a method for providing a sensing service by a mobile radio communication system is provided, comprising operating, in a mobile terminal of the mobile radio communication system, a secure element provisioned with a sensing service profile which specifies one or more sensing parameters, receiving, by the mobile terminal, a request to perform a sensing, wherein the sensing comprises transmitting one or more mobile radio communication signals, receiving one or more reflections of the one or more mobile radio communication signals and determining sensing data from the one or more reflections, and performing the sensing according to the one or more sensing parameters by the mobile terminal.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: illustrates a communication system.
- Figure 2: gives another illustration of a communication system.
- Figure 3: shows a mobile terminal in more detail.
- Figure 4: illustrates a message flow between a mobile terminal, a communication network and a third party.
- Figure 5: shows a flow diagram illustrating a method for providing a sensing service by a mobile radio communication system.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for providing a sensing service by a mobile radio communication system, comprising operating, in a mobile terminal of the mobile radio communication system, a secure element provisioned with a sensing service profile which specifies one or more sensing parameters, receiving, by the mobile terminal, a request to perform a sensing, wherein the sensing comprises transmitting one or more mobile radio communication signals, receiving one or more reflections of the one or more mobile radio communication signals and determining sensing data from the one or more reflections and performing the sensing according to the one or more sensing parameters by the mobile terminal.
Example 2 is the method of example 1, wherein the secure element implements a subscriber identity module of the mobile terminal.
Example 3 is the method of example 1 or 2, wherein the secure element is a universal integrated circuit card or an embedded subscriber identity module.
Example 4 is the method of any one of examples 1 to 3, wherein the sensing service profile is protected from being written and/or modified by the mobile terminal.
Example 5 is the method of any one of examples 1 to 4, wherein the secure element is provided by an operator of a communication network of the communication system serving the mobile terminal (i.e. the mobile terminal uses the communication network for example to transmit the sensing data, e.g. to a third party having requested the sensing).
Example 6 is the method of any one of examples 1 to 5, wherein the sensing data includes information about characteristics of an environment of the mobile terminal and/or objects within the environment of the mobile terminal.
Example 7 is the method of example 6, wherein the characteristics include distance (range) from the mobile terminal, angular position with respect to the mobile terminal, and/or velocity with respect to the mobile terminal of one or more objects.
Example 8 is the method of any one of examples 1 to 7, further comprising informing, by the mobile terminal, a user of the mobile terminal about that the sensing according to the one or more sensing parameters is to be performed by the mobile terminal.
Example 9 is the method of example 8, comprising requesting the user to agree to that the mobile terminal performs the sensing.
Example 10 is the method of example 9, comprising performing the sensing in reaction to the user agreeing that the mobile terminal performs the sensing (and else not performing the sensing).
Example 11 is the method of any one of examples 1 to 10, wherein the one or more sensing parameters include a parameter which indicates whether the mobile terminal is allowed to perform the sensing and the method comprises performing the sensing in reaction to the parameter indicating that the mobile terminal is allowed to perform the sensing (and else not performing the sensing).
Example 12 is the method of any one of examples 1 to 11, wherein the one or more sensing parameters indicates one or more geographical location where the mobile terminal is allowed to perform the sensing and the method comprises the mobile terminal determining a location of the mobile terminal and performing the sensing in reaction to the mobile terminal being at a location for which the one or more sensing parameters indicate that the mobile terminal is allowed to perform the sensing (and else not performing the sensing).
Example 13 is the method of any one of examples 1 to 12, wherein the sensing comprises an object detection.
Example 14 is the method of any one of examples 1 to 13, wherein the sensing is Integrated Sensing and Communication according to Third Generation Partnership Project.
Example 15 is the method of any one of examples 1 to 14, wherein the one or more sensing parameters specify a destination of where sensing data gathered by the sensing should be transmitted and the method comprises transmitting, by the mobile terminal, the sensing data to the destination (e.g. an URL or any device address, APN, etc.).
Example 16 is the method of any one of examples 1 to 15, wherein the one or more sensing parameters specify radio parameters of the one or more mobile radio communication signals (i.e. the mobile terminal sends, for the sensing, mobile radio communication signals with characteristics as given by the radio parameters (e.g. in a certain frequency band, in certain time slots, etc.)).
Example 17 is the method of any one of examples 1 to 16, wherein the one or more sensing parameters specify a sensing mode and the mobile terminal performs the sending in the sensing mode.
Example 18 is the method of any one of examples 1 to 17, comprising reading the one or more sensing parameters from the secure element (before or after receiving the request to perform the sensing).
Example 19 is a mobile terminal, configured to perform the method of any one of examples 1 to 18.

It should be noted that one or more of the features of any of the examples above may be combined with any one of the other examples. In particular, the Examples described in context of the device are analogously valid for the method.

According to further embodiments, a computer program and a computer readable medium comprising instructions, which, when executed by a computer, make the computer perform the method of any one of the above Examples are provided.

In the following, various examples will be described in more detail.

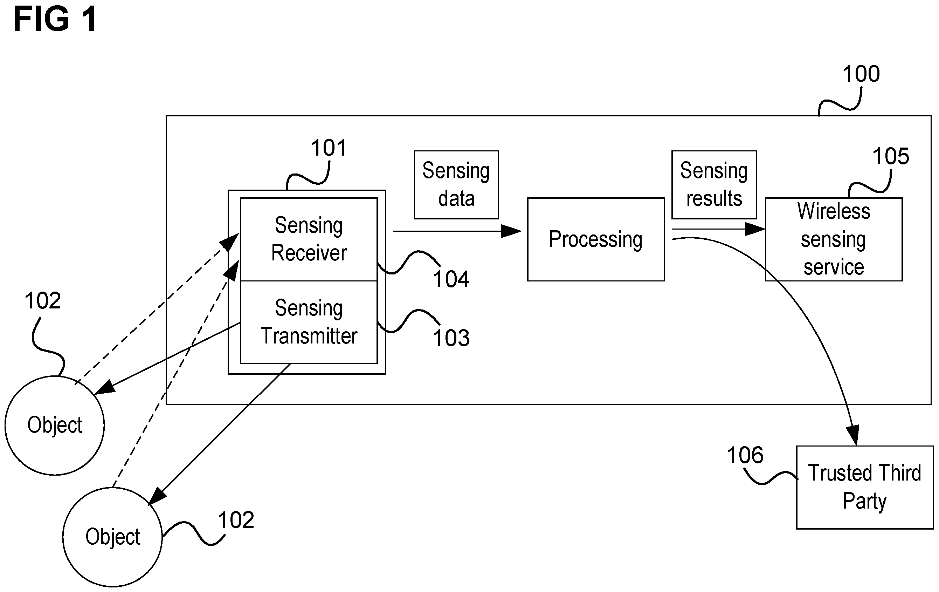

Figure 1 shows a communication system 100, e.g. according to 3GPP (third generation partnership project) comprising a mobile terminal 101 performing sensing (e.g. according to Integrated Sensing and Communication (ISAC) according to 3GPP, see 3GPP TS 22.137), i.e. to provide an (environment) sensing service.

The sensing (e.g. ISAC) refers to (e.g. 5G) wireless sensing, which is a (e.g. 5G) communication system feature providing capabilities to get information about characteristics of the mobile terminal's environment and/or objects 102 within the mobile terminal's environment (e.g., shape, size, orientation, speed, location, distances or relative motion between objects 102, etc) using (e.g. NR (new radio) radio frequency signals, which, in some cases, can be extended by information created via previously specified functionalities in the communication system's core network (e.g. EPC (evolved packet core) and/or radio access network (e.g. E-UTRAN (evolved UMTS Terrestrial Radio Access)).

For this, the mobile terminal (also referred herein as UE (user equipment) according to 3GPP), implements a sensing transmitter 103 and a sensing receiver 104 which acquires (e.g. 3GPP) sensing data, i.e. data (or information) derived from (e.g. 3GPP) radio (sensing) signals (sent out by the transmitter 103 and) impacted (e.g., reflected, refracted, diffracted) by an object 102 or environment of interest for sensing purposes. The sensing data is then optionally processed (e.g. to generate sensing results) within the communication system 100 and used with the communication system 100 (by a wireless sending service 105) and/or delivered to a third party 106.

Sensing scenarios (with respect to where sensing is performed) include
- Indoor sensing, wherein sensing is limited to a specific/pre-defined area. Since sensing is limited to a specific area privacy measures can be more easily applied and user consent can be rather easily handled
- Outdoor sensing, wherein sensing has a wider range and it may be hard to achieve or implement privacy measures and user consent.

According to 3GPP TS 22.137, mobile network operators should be able to expose the collected sensing data or sensing results to a third party 106 (and/or authorized users). However, exposing data to a third party 106 raises issues related to security and privacy. Furthermore, the ability of a third party 106 to trigger mobile terminals to start performing sensing raises additional security issues.

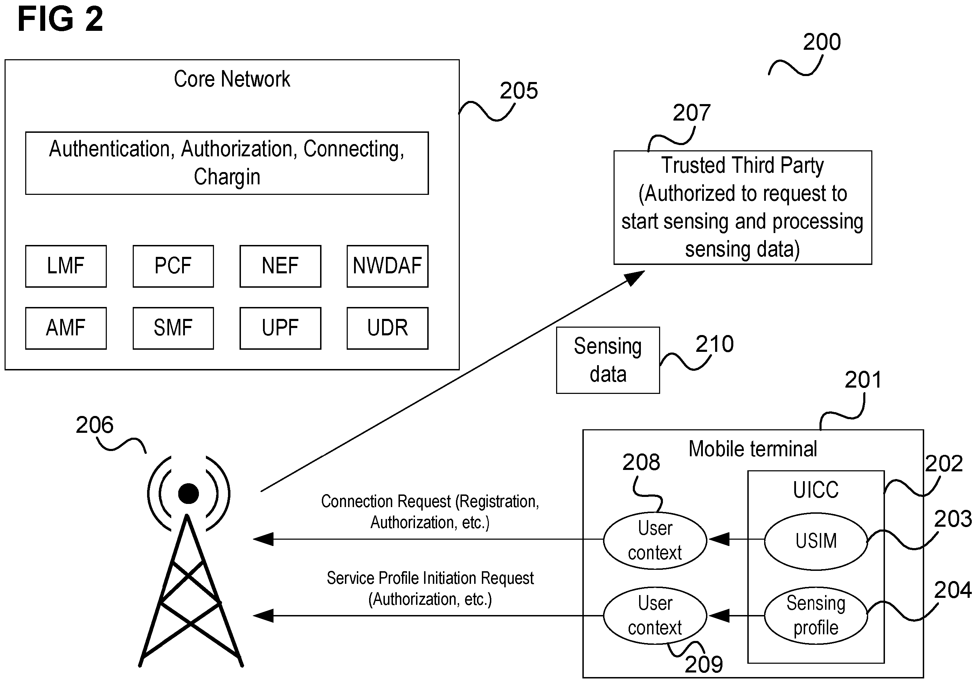

In view of the above, to give the mobile network operator (MNO) and possibly also (at least partially) the user control of sensing performed by a mobile terminal, a sensing profile (or sensing service profile) is provided (i.e. defined, provisioned and/or stored) on a secure element of the mobile terminal 101, as described in the following with reference to figure 2. The secure element is for example a UICC (universal integrated circuit card) of the mobile terminal.

Figure 2 shows a communication system 200 comprising a mobile terminal 201 (e.g. corresponding to mobile terminal 101) having a UICC 202 implementing a USIM (universal subscriber identity module) 203 and storing a sensing profile 204.

The network side comprises a core network 205 and a radio access network (here represented by a single base station 206 which is the serving base station of the mobile terminal 201) of a mobile communication network, e.g. a 5G or a 6G mobile communication network, e.g. according to 3GPP. The core network 205 performs operations like authentication, authorization, connecting and charging for the mobile terminal 201 using network functions like
- LMF (Location Management Function)
- PCF (Policy Control Function)
- NEF (Network Exposure Function)
- NWDAF (Network Data Analytics Function)
- AMF (Access and Mobility Management Function)
- SMF (Session Management Function)
- UPF (User Plane Function)
- UDR (Unified Data Repository)

The MNO of the communication network (serving the mobile terminal 201 and forming the communication system together with the mobile terminal 201) can thus define the sensing profile 204 (e.g. by writing it to the UICC 202 delivered to the mobile terminal user) which includes sensing service parameters. This sensing profile 204 (e.g. when activated to be used for sensing) enables the mobile terminal 201 to perform sensing (according to the MNO's definitions), wherein activation of the sensing profile 204 or the sensing can require user consent (e.g. for activating it the first time). For example, the user of the mobile terminal 201 is presented on the screen of the mobile terminal to allow sensing. The user may also be notified when the sensing service is being used (e.g. via dedicated client on the mobile terminal 201), i.e. when the user's mobile terminal 201 performs sensing.

The MNO can create, modify, manage, update, remove the sensing profile 204 based on the service requirements a third party 207 requests and/or the MNO offers, using the existing and standardized profile managing and provisioning mechanisms. One or more components of the communication system, e.g. the core network 205 may manage the sensing service and may send a request to the mobile terminal 201 to start sensing (e.g. in reaction to receiving a request from the third party 207 for sensing).

The sensing profile 204 can for example be added to (provisioned to and stored in) the UICC 202 similarly to an IMS (Internet Multimedia Subsystem) profile (e.g. light version).

The sensing profile 204 is used to securely store one or more sensing service parameters required to connect the mobile terminal 201 to the communication network (for the sensing service) and/or for utilizing and providing the sensing service. For example, the sensing profile 204 includes parameters as sensing service parameters such as
- User Identifier (User service ID) of the mobile terminal's user
- Frequency bands and radio parameters to be used for the sensing (e.g. transmitting and receiving sensing signals)
- Sensing operating mode (receiver and/or transmitter: Monostatic, Bistatic, Multi static)
- APN addresses (e.g. specifying where the mobile terminal should route the sensing data)
- service identifier and/or class (according to the sensing service the mobile terminal is configured to provide and agreed KPIs (key performance indicators), regulations etc.)
- monitoring and discovery parameters (e.g. for restricted and authorized PLMN (public land mobile network) discovery, e.g. that the mobile terminal may use for sending sensing data)
- geographical area information
- collected data destination Information. For example, the mobile terminal can transfer the sensing data via control plane (e.g., NAS (non-access stratum), RRC (radio resource control)) or via user plane (the sensing service parameters can for example define the target URL (uniform resource locator)

The sensing profile can be an additional separate profile on the UICC 202 or part of another profile, e.g. a subscription profile, in the mobile terminal's USIM 203, e.g. by adding parameters only that are not already included in the subscription (or other) profile (e.g. an additional user ID for the sensing service may not be required). A combination of both may also be used, i.e. some sensing service parameters may be added to the subscription profile while others are included in a separate profile, i.e. the sensing profile may be formed by a part included in a subscription profile and by a part separate from the subscription profile.

Using information of a subscription profile on the USIM 203, the mobile terminal 201 may connect to the communication network by sending a connection request (for registration, authorization etc.) to the base station 206. The mobile terminal 201 may store information about a user context 208 and use the information about the user context 208 to allow faster re-connection to the network. According to various embodiments, the mobile terminal 201 indicates to the network its support of the sensing service, e.g. in UE Capabilities, and/or its access category (e.g. for delivering sensing data), for example over RCC, NAS or both.

Similarly, using information of the sensing profile 204, the mobile terminal 201 may connect to the communication network for the sensing service, e.g. for delivering sensing data (e.g. for authorization to use the network for delivering sensing data) and the mobile terminal 201 may store and use a sensing-related user context 209 to allow faster re-connection or establishment of a sensing data transfer connection.

Sensing data 210 acquired and delivered by the mobile terminal 201 may be preprocessed by the communication network before being delivered to the third party 207. This may happen in the core network 205 or in a separate component, e.g. by an application server and/or in a network edge component.

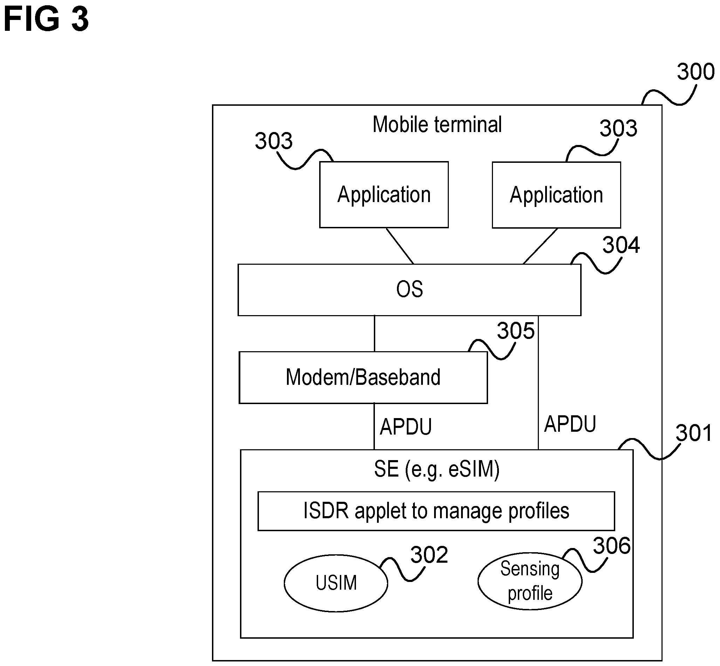

Figure 3 shows a mobile terminal 300 in more detail.

As explained with reference to figure 2, the mobile terminal 300 includes a secure element 301 implementing a USIM 302 and storing a sensing profile 306. The secure element 301 is for example a UICC or an eSIM (embedded subscriber identity module). The secure element 301 includes software to manage profiles stored on the secure element 301, e.g. an ISDR (Integrated Secure Digital Radio) applet. Applications 303 running on the mobile terminal 300 and the mobile terminal's operations system 304 may access the profiles, possibly via modem and/or baseband circuitry 305, e.g. using one or more APDUs (Application Protocol Data Units).

In particular, a sensing application 303 can use sensing service parameters included in the sensing profile 306 on the secure element 301 (e.g. the sensing application 303 may read a stored URL indicating where to deliver sensing data.)

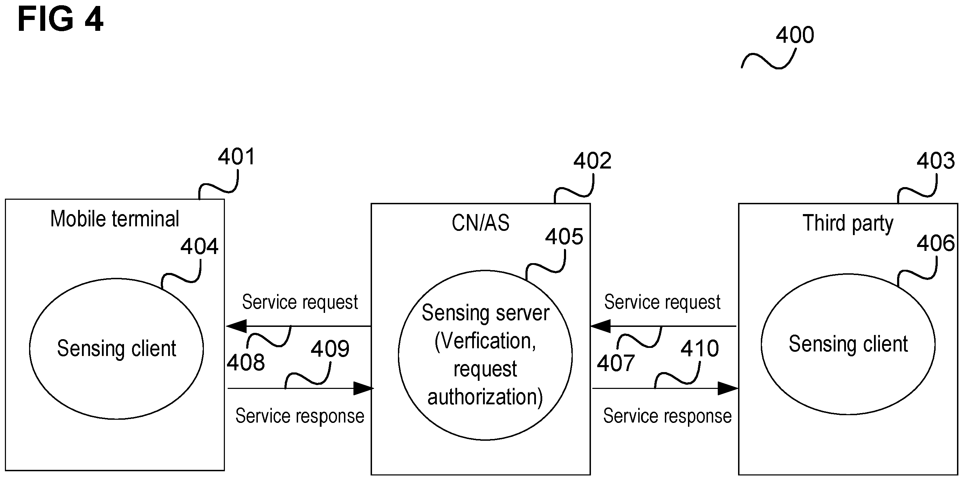

Figure 4 illustrates a message flow between a mobile terminal 401 (specifically a terminal sensing client running on the mobile terminal 401, which may correspond to one of the applications 303), the communication network 402 (e.g. one or more core network components or an application server, specifically a sensing service server 405 running on the network side) and a third party 403 (specifically a second sensing client 406 running on a device of the third party 403).

The communication network 402 (e.g. its core network) performs authentication and authorization of the mobile terminal 401 based on parameters defined in the sensing profile stored on the mobile terminal 401 and provided by the mobile terminal 401 when requesting a connection (e.g. for delivering the sensing data) from the communication network 402. Depending on the use case, the connection may be provided using RTP (real-time transfer protocol, such as in IMS).

When a connection has been established between the mobile terminal 401 and the communication network 402, a client - server communication concept can be used for utilizing the sensing service by the third party 403, i.e. the third party 403 initiates the request of the sensing service which is verified and treated by the service server 405, as described in the following.

In 407, the second sensing client 406 sends a service request for the sensing service to the service server 405 which the service server 405 forwards to the first sensing client 404 in 408 (e.g. after verification that the third party 403 may use the sensing service and only forwarding the request if it may use the sensing device). The service server 405 may also determine to which mobile terminals the service request should be forwarded, e.g. depending on geographic location of the mobile terminals and where sensing data should be acquired according to the service request sent by the third party 403.

When the mobile terminal 401 provides sensing at a certain location (as e.g. specified in the sensing service parameters), the second sensing client 406 may request to start sensing at that location. In some scenarios, the third party 403 may have no interest on what type of users and/or mobile terminals are in that location and perform the sensing but may only be interested in the sensing data (or sensing results).

Sensing may also be based on certain applications and/or user triggers (e.g. two factor authentication in a video conference targeting a certain user). In such a scenario an identification of the user or a service ID matters for the sensing service (and e.g. whether the sensing server 405 forwards a sensing request to a certain mobile terminal 401).

In 409, the first sensing client 404 sends one or more responses to the service server 405 which the service server 404 forwards (e.g. one by one as it receives them) to the second sensing client 406 in 410. For example, a first response is an acknowledgement and later responses include sensing data acquired by the mobile terminal 401.

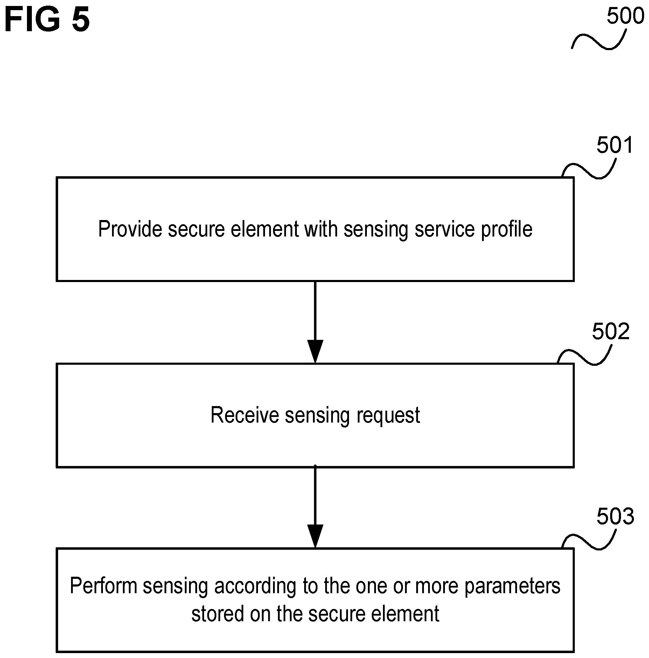

In summary, according to various embodiments, a method is provided as illustrated in figure 5.

Figure 5 shows a flow diagram 500 illustrating a method for providing a sensing service by a mobile radio communication system. Since, according to various embodiments, the sensing service comprises sensing an environment and/or objects in an environment of a mobile terminal, it can be denoted as an environment and/or object sensing service.

In 501, a secure element provisioned with a sensing service profile which specifies one or more sensing parameters is operated (e.g. started to be operated) in a mobile terminal of the mobile radio communication system.

In 502, the mobile terminal receives a request to perform a sensing (from a communication network of the communication system), wherein the sensing comprises transmitting one or more mobile radio communication signals, receiving one or more reflections of the one or more mobile radio communication signals and determining sensing data from the one or more reflections.

In 503, the mobile terminal performs the sensing according to the one or more sensing parameters (i.e. it uses and/or considers the sensing parameters stored on the secure element when performing the sensing).

According to various embodiments, in other words, a secure mechanism is provided to enable an operator to provide a sensing service, i.e. to allow the operator to control usage of the sensing service, by storing parameters controlling the usage of the sensing service (i.e. provisioning a sensing profile) on a secure element (in particular UICC, which is controlled by the operator). Hosting a sensing profile in the secure element enables the operator to use existing standardized methods for activating, managing, creating, modifying, deleting the sensing service profile and accordingly the service parameters within the mobile terminal served by the operator's communication network.

A sensing profile provisioned on a secure element (e.g. UICC) enables an operator to use, activate (enable) and offer a sensing service over the operator's communication network in a controlled and secure manner to users, customers and/or service consumers. Further, privacy may be respected by ensuring user consent before activating sensing on the mobile terminal. For example, the sensing profile may specify that user consent needs to be obtained before using the sensing service. Multiple sensing profiles may be provisioned on the secure element to cover different use cases, subscriptions, etc.

The method is for example performed by one or more circuits (e.g. of a mobile terminal or of a communication system). A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit". According to an embodiment, a communication system is provided which comprises the mobile terminal and which is particular configured (i.e. comprises one or more components configured) to provision the secure element with the sensing profile.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for providing a sensing service by a mobile radio communication system, comprising:
operating, in a mobile terminal of the mobile radio communication system, a secure element provisioned with a sensing service profile which specifies one or more sensing parameters;
receiving, by the mobile terminal, a request to perform a sensing, wherein the sensing comprises transmitting one or more mobile radio communication signals, receiving one or more reflections of the one or more mobile radio communication signals and determining sensing data from the one or more reflections; and
performing the sensing according to the one or more sensing parameters by the mobile terminal.

2. The method of claim 1, wherein the secure element implements a subscriber identity module of the mobile terminal.

3. The method of claim 1 or 2, wherein the secure element is a universal integrated circuit card or an embedded subscriber identity module.

4. The method of any one of claims 1 to 3, wherein the sensing service profile is protected from being written and/or modified by the mobile terminal.

5. The method of any one of claims 1 to 4, wherein the secure element is provided by an operator of a communication network of the communication system serving the mobile terminal.

6. The method of any one of claims 1 to 5, further comprising informing, by the mobile terminal, a user of the mobile terminal about that the sensing according to the one or more sensing parameters is to be performed by the mobile terminal.

7. The method of claim 6, comprising requesting the user to agree to that the mobile terminal performs the sensing.

8. The method of claim 7, comprising performing the sensing in reaction to the user agreeing that the mobile terminal performs the sensing.

9. The method of any one of claims 1 to 8, wherein the one or more sensing parameters include a parameter which indicates whether the mobile terminal is allowed to perform the sensing and the method comprises performing the sensing in reaction to the parameter indicating that the mobile terminal is allowed to perform the sensing.

10. The method of any one of claims 1 to 9, wherein the one or more sensing parameters indicates one or more geographical location where the mobile terminal is allowed to perform the sensing and the method comprises the mobile terminal determining a location of the mobile terminal and performing the sensing in reaction to the mobile terminal being at a location for which the one or more sensing parameters indicate that the mobile terminal is allowed to perform the sensing.

11. The method of any one of claims 1 to 10, wherein the sensing is Integrated Sensing and Communication according to Third Generation Partnership Project.

12. The method of any one of claims 1 to 11, wherein the one or more sensing parameters specify a destination of where sensing data gathered by the sensing should be transmitted and the method comprises transmitting, by the mobile terminal, the sensing data to the destination.

13. The method of any one of claims 1 to 12, wherein the one or more sensing parameters specify radio parameters of the one or more mobile radio communication signals.

14. The method of any one of claims 1 to 13, wherein the one or more sensing parameters specify a sensing mode and the mobile terminal performs the sending in the sensing mode.

15. A mobile terminal, configured to perform the method of any one of claims 1 to 14.

## Amended claims

### Amended claims in accordance with Rule 137(2) EPC.

1. A method (500) for providing a sensing service by a mobile radio communication system (100), comprising:
operating (501), in a mobile terminal (101, 201, 300, 401) of the mobile radio communication system, a secure element (202, 301) provisioned with a sensing service profile (204, 306) which specifies one or more sensing parameters;
receiving (502), by the mobile terminal, a request to perform a sensing, wherein the sensing comprises transmitting one or more mobile radio communication signals,
receiving one or more reflections of the one or more mobile radio communication signals and determining sensing data from the one or more reflections, wherein, after receiving the request to perform sensing by the mobile terminal, the mobile radio communication system performs authentication and authorization of the mobile terminal based on the parameters defined in the sensing service profile, wherein
performing said authentication and authorization comprises verifying if authentication and authorization of the mobile terminal have been previously determined and granted, and
wherein the sensing parameters include a parameter indicating whether the mobile terminal is allowed to perform the sensing; and
performing (503) the sensing by the mobile terminal only if the parameter indicating whether the mobile terminal is allowed to perform the sensing indicates that the mobile terminal is allowed to perform the sensing, and performing the sensing according to the one or more sensing parameters.

2. The method of claim 1, wherein the secure element (202, 301) implements a subscriber identity module of the mobile terminal.

3. The method of claim 1 or 2, wherein the secure element (202, 301) is a universal integrated circuit card or an embedded subscriber identity module.

4. The method of any one of claims 1 to 3, wherein the sensing service profile (204, 306) is protected from being written and/or modified by the mobile terminal (101, 201, 300, 401).

5. The method of any one of claims 1 to 4, wherein the secure element (202, 301) is provided by an operator of a communication network of the communication system (100) serving the mobile terminal (101, 201, 300, 401).

6. The method of any one of claims 1 to 5, further comprising informing, by the mobile terminal (101, 201, 300, 401), a user of the mobile terminal about that the sensing according to the one or more sensing parameters is to be performed by the mobile terminal.

7. The method of claim 6, comprising requesting the user to agree to that the mobile terminal (101, 201, 300, 401) performs the sensing.

8. The method of claim 7, comprising performing the sensing in reaction to the user agreeing that the mobile terminal (101, 201, 300, 401) performs the sensing.

9. The method of any one of claims 1 to 8, wherein the one or more sensing parameters indicates one or more geographical location where the mobile terminal (101, 201, 300, 401) is allowed to perform the sensing and the method comprises the mobile terminal determining a location of the mobile terminal and performing the sensing in reaction to the mobile terminal being at a location for which the one or more sensing parameters indicate that the mobile terminal is allowed to perform the sensing.

10. The method of any one of claims 1 to 9, wherein the sensing is Integrated Sensing and Communication according to Third Generation Partnership Project.

11. The method of any one of claims 1 to 10, wherein the one or more sensing parameters specify a destination of where sensing data gathered by the sensing should be transmitted and the method comprises transmitting, by the mobile terminal (101, 201, 300, 401), the sensing data to the destination.

12. The method of any one of claims 1 to 11, wherein the one or more sensing parameters specify radio parameters of the one or more mobile radio communication signals.

13. The method of any one of claims 1 to 12, wherein the one or more sensing parameters specify a sensing mode and the mobile terminal (101, 201, 300, 401) performs the sensing in the sensing mode.

14. A mobile terminal (101, 201, 300, 401), configured to perform the method of any one of claims 1 to 13.
